# EUROPÄISCHE PATENTSCHRIFT

(11) **EP 1 418 192 B1**
(45) Veröffentlichungstag und Bekanntmachung des Hinweises auf die Patenterteilung: **08.10.2014**
(21) Anmeldenummer: 03024614.4
(22) Anmeldetag: 25.10.2003
(51) Int. Cl.: C08G 18/08, C08G 18/44, C08G 18/66, C08J 7/04

(54) **Verfahren zur Herstellung wässriger Beschichtungssysteme auf Basis wasserverdünnbarer Polyurethanharze**
Process for the preparation of aqueous coating systems based on water dispersible polyurethane resins
Procédé de préparation de systèmes de revêtement basés sur des résines polyuréthane hydrodispersables

(30) Priorität: 07.11.2002 DE 10251797
(43) Veröffentlichungstag der Anmeldung: 12.05.2004
(73) Patentinhaber: Bayer Intellectual Property GmbH, 40789 Monheim (DE)
(72) Erfinder: Melchiors, Martin, Dr., 42799 Leichlingen (DE); Münzmay, Thomas, Dr., 41539 Dormagen (DE); Pohl, Torsten, Dr., 50670 Köln (DE); Klippert, Uwe, 51399 Burscheid (DE)
(74) Vertreter: BIP Patents

(56) Entgegenhaltungen:
- EP-A- 0 578 940
- EP-A- 0 669 352
- EP-A2- 0 926 172
- WO-A-00/50482

## Beschreibung

Die Erfindung betrifft Verfahren Zur Herstellung von nichtwässrigen gelösten, wasserdispergierbaren Polyurethanharzen mit hohem Carbonatgruppengehalt, sowie deren Verwendung.

"Softfeel-Effekt" im Sinne der vorliegenden Erfindung bezeichnet ein besonderes Griffempfinden (Haptik) der lackierten Oberfläche. Diese Haptik lässt sich mit Begriffen wie samtig, weich, gummiartig oder warm umschreiben, während sich z.B. die Oberfläche einer lackierten Auto-Karosse oder auch eine unlackierte oder mit einem üblichen Klar- oder Decklack beschichtete Kunststoff-Platte (z.B. ABS, Makrolon) oder Plexiglas kalt und glatt anfühlt. In der EP-A 0 529 094 wird beispielsweise eine lösemittel-basierte Oberflächenbeschichtung mit Softfeel-Effekt beschrieben, wobei diese Haptik dort durch die Kombination eines Urethanharzes mit elastischen Partikeln oder einem porösen anorganischen Material erzielt wird.

Moderne wässrige Beschichtungsmittel sind in der Lage, in vielen Anwendungen organisch gelöste Bindemittel zu substituieren. Für einige Anwendungen mit speziellen Anforderungsprofilen, wie z.B. der Lackierung von Substraten, insbesondere Kunststoffsubstraten mit Softfeel-Effektlacken, fehlen bis heute jedoch wässrige Bindemittel, die allen gestellten Anforderungen, insbesondere auch an die Beständigkeitseigenschaften der Filme, gerecht werden. So werden z.B. in der EP-A 0 358 979 wässrige Zweikomponenten-Polyurethan-Reaktivsysteme auf Basis von Vinylpolymerisat-Sekundärdispersionen und Polyisocyanat-Vernetzern beschrieben, die bereits ein gutes Eigenschaftsniveau, insbesondere im Hinblick auf Lösemittelund Chemikalienbeständigkeit, aufweisen. Allerdings lässt sich mit diesen Beschichtungsmitteln die angestrebte Softfeel-Haptik nicht erzielen.

In der EP-A 0 669 352 werden spezielle wässrige Polyester-Polyurethan-Dispersionen beschrieben, die, in Kombination mit Vemetzerharzen sowie gegebenenfalls linearen, hydroxylgruppenfreien Polyurethan-Dispersionen, zu Beschichtungen mit gutem Softfeel-Effekt, guter Filmmechanik und einer im allgemeinen zufriedenstellenden Lösemittelbeständigkeit ausgehärtet werden können. Für einige Anwendungen sind aber die Beständigkeitseigenschaften, insbesondere die Beständigkeit gegen Sonnenmilch, noch verbesserungsbedürftig.

In der EP-A 0 926 172 werden wässrige Zweikomponente-(2K)-Polyurethanlacke beschrieben, in denen durch Verwendung spezieller Ester-modifizierter Polyisocyanate die Beständigkeit gegen Sonnenmilch (Penetration in den Film mit Schädigung bzw. Enthaftung) verbessert werden kann. Dabei werden als Bindemittel Gemische aus Carboxylat- und/oder Sulfonat-hydrophilierten Polyesterpolyol-Dispersionen mit physikalisch trocknenden, Carboxylat- und/oder Sulfonat-hydrophilierten Polyurethan-Dispersionen eingesetzt.

Aufgabe der vorliegenden Erfindung bestand in der Bereitstellung eines Verfahrens Zur Herstellung neuen Polyurethanharzes, welches sich zu wässrigen Beschichtungsmitteln verarbeiten lässt, die gute Beständigkeitseigenschaften, insbesondere gegen die Schädigung durch Einwirken von Sonnenmilch ("suntan lotion resistance") und gleichzeitig einen ausgeprägten Softfeel-Effekt des Films aufweisen. Des Weiteren sollten die Polyurethanharze sich problemlos mit den kommerziell verfügbaren hydrophilierten oder nichthydrophilierten Polyisocyanaten zu Lacksystemen verarbeiten lassen.

Gegenstand der vorliegenden Erfindung ist ein Verfahren Zur Herstellung wässriger Beschichtungssysteme wobei das wasserverdünnbare Polyurethanharz erhältlich ist durch Umsetzung von
A1) mindestens einem Polycarbonatpolyol des Molekulargewichts Mₙ von 400 bis 6000 Da,
A2) gegebenenfalls eines von Komponente (A1) verschiedenen Polyesterpolyols des zahlenmittleren Molekulargewichts Mn von 400 bis 6000 Da,
A3) gegebenenfalls einer niedermolekularen, zwei oder mehr Hydroxyl- und/oder Aminogruppen-haltigen Verbindung des Molekulargewichts 62 bis 400 Da,
A4) gegebenenfalls einer Verbindung, die bezüglich der Reaktion mit Isocyanat-Gruppen monofunktionell ist oder aktive Wasserstoff-Atome unterschiedlicher Reaktivität enthält, wobei sich diese Bausteine jeweils am Kettenende des Urethangruppen enthaltenden Polymers befinden,
A5) mindestens eine Verbindung, die mindestens zwei gegenüber Isocyanatgruppen reaktive Gruppen und mindestens eine zur Anionenbildung befähigte Gruppe aufweist und
A6) ein oder mehrere Polyisocyanate,
wobei das entstehende Polyurethanharz einen Gehalt an eingebauten Carbonatgruppen O(C=O)O von 5,8 bis 20,0 Gew.-%, bevorzugt von 7,0 bis 14,0 Gew.-%, besonders bevorzugt von 8,0 bis 12,0 Gew.-% enthält und der Festkörpergehalt mindestens 70 Gew.-% beträgt, wobei sich der zu 100 Gew.-% fehlende Rest aus gegenüber Isocyanatgruppen inerten Lösemitteln sowie gegebenenfalls lacküblichen Hilfs- und Zusatzstoffen besteht, in eine wässrige Phase, enthaltend mindestens eine wässrige Polyurethan- Dispersion mit einem OH-Gehalt < 0,5 Gew.-% und gegebenenfalls Hilfs- und Zusatzstoffe, eingearbeitet wird und anschließend in diesen wässrigen Stammlack mindestens eine Vernetzerkomponente sowie gegebenenfalls weitere Hilfs- und Zusatzstoffe dispergiert werden.

Die wasserverdünnbaren Polyurethanharze besitzen im Allgemeinen ein mittleres Molekulargewicht Mₙ von 1000 bis 30 000 Da, bevorzugt von 1 500 bis 10 000 Da, eine Säurezahl von 10 bis 80, bevorzugt von 15 bis 40 mg KOH/g und einen OH-Gehalt von 0,5 bis 5 Gew.-%, bevorzugt von 1,0 bis 3,5 Gew.-%. Der Festkörpergehalt der Polyurethanharze beträgt mindestens 50 Gew.-%, bevorzugt mindestens 70 Gew.- % und besonders bevorzugt 75 bis 90 Gew.-%. Der zu 100 Gew.-% fehlende Rest besteht aus gegenüber Isocyanatgruppen inerten Lösemitteln sowie gegebenenfalls lacküblichen Hilfs- und Zusatzstoffen.

Das Polyurethan besizt üblicherweise einem OH-Gehalt < 0,2 Gew.-%.

Die Polyurethanharze sind aufgebaut aus
A1) 25 bis 80 Gew.-%, bevorzugt 30 bis 70 Gew.-% mindestens eines Polycarbonatpolyols des Molekulargewichts Mn von 400 bis 6000 Da, das einen Gehalt an Carbonatgruppen von mindestens 10 Gew.-% aufweist,
A2) 0 bis 60 Gew.-%, bevorzugt 10 bis 50 Gew.-% mindestens einem von Komponente (A1) verschiedenen Polyesterpolyols des zahlenmittleren Molekulargewichts Mn von 400 bis 6000 Da,
A3) 0 bis 20 Gew.-%, bevorzugt 1 bis 15 Gew.-% mindestens einer niedermolekularen, zwei oder mehr Hydroxyl- und/oder Aminogruppen-haltigen Verbindung des Molekulargewichts 60 bis 400 Da,
A4) 0 bis 10 Gew.-%, bevorzugt 0 Gew.-% mindestens einer Verbindung, die bezüglich der Reaktion mit Isoyanat-Gruppen monofunktionell ist oder aktive Wasserstoff-Atome unterschiedlicher Reaktivität enthält, wobei sich diese Bausteine jeweils am Kettenende des Urethangruppen enthaltenden Polymers befinden,
A5) 2 bis 10 Gew.-%, bevorzugt 3 bis 8 Gew.-% mindestens einer Verbindung, die mindestens zwei gegenüber Isocyanatgruppen reaktive Gruppen und mindestens eine zur Anionenbildung befähigte Gruppe aufweist und
A6) 5 bis 50 Gew.-%, bevorzugt 8 bis 30 Gew.-% ein oder mehrere Polyisocyanate,
wobei die Summe der Komponenten 100 Gew.-% ergibt.

Als Komponente (A1) kommen Hydroxylgruppen aufweisenden Polycarbonate des Molekulargewichts Mn von 400 bis 6000 Da, bevorzugt 600 bis 3000 Da in Frage, die z.B. durch Reaktion von Kohlensäurederivaten, z.B. Diphenylcarbonat, Dimethylcarbonat oder Phosgen mit Polyolen, bevorzugt Diolen erhältlich sind. Als derartige Diole kommen z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A aber auch Lacton-modifizierte Diole in Frage. Bevorzugt enthält die Diolkomponente 40 bis 100 Gew.-% Hexandiol, bevorzugt 1,6-Hexandiol und/oder Hexandiol-Derivate, bevorzugt solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton oder durch Veretherung von Hexandiol mit sich selbst zum Di- oder Trihexylenglykol erhalten wurden. Auch die in der DE-A 37 17 060 beschriebenen Polyether-Polycarbonatdiole können eingesetzt werden.

Bevorzugt sind die Hydroxylpolycarbonate (A1) linear. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolethan, Pentaerythrit, Chinit, Mannit, und Sorbit, Methylglykosid oder 1,3:4,6-Dianhydrohexite.

Als Komponente (A2) einsetzbare Polyesterpolyole weisen ein Molekulargewicht Mn von 400 bis 6000 Da, bevorzugt von 600 bis 3000 Da auf. Ihre Hydroxylzahl beträgt im Allgemeinen 22 bis 400, bevorzugt 50 bis 200 und besonders bevorzugt 80 bis 160 mg KOH/g. Die OH-Funktionalität liegt im Bereich von 1,5 bis 6, bevorzugt von 1,8 bis 3 und besonders bevorzugt von 1,9 bis 2,5.

Gut geeignete Verbindungen sind die an sich bekannten Polykondensate aus Disowie gegebenenfalls Poly(Tri,Tetra)olen und Di- sowie gegebenenfalls Poly(Tri,-Tetra)carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin Propandiol oder Butandiol(1,4), bevorzugt sind Hexandiol(1,6), Neopentylglykol oder Hydroxypivalinsäureneopentylglykolester. Gegebenenfalls können auch Polyole wie beispielsweise Trimethylolpropan, Glycerin, Erythrit, Pentaerythrit, Trimethylolbenzol oder Trishydroxyethylisocyanurat mitverwendet werden.

Geeignete Dicarbonsäuren sind beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbemsteinsäure, 3,3-Diethylglutarsäure, 2,2-Dimethylbemsteinsäure. Die möglichen Anhydride dieser Säuren sind ebenfalls geeignet. Im Sinne der vorliegenden Erfindung werden die Anhydride immer durch den Ausdruck "Säure" mitumfasst.

Es können auch Monocarbonsäuren, wie Benzoesäure und Hexancarbonsäure verwendet werden, vorausgesetzt, dass die mittlere Funktionalität des Polyols höher als 2 ist. Gesättigte aliphatische oder aromatische Säuren sind bevorzugt, wie Adipinsäure oder Isophthalsäure. Gegebenenfalls können auch kleinere Mengen Polycarbonsäure, wie Trimellitsäure miteingesetzt werden.

Hydroxycarbonsäuren, die als Reaktionsteilnehmer bei der Herstellung eines Polyesterpolyols mit endständigen Hydroxylgruppen verwendet werden können sind beispielsweise Hydroxycapronsäure, Hydroxybuttersäure, Hydroxydecansäure, Hydroxystearinsäure und dergleichen. Geeignete Lactone sind z.B. Caprolacton oder Butyrolacton.

Verbindungen der Komponente (A2) können zumindest anteilig auch primäre oder sekundäre Aminogruppen als Isocyanat-reaktive Gruppen enthalten.

Die niedermolekularen Polyole (A3) werden in der Regel zwecks Versteifung und/oder Verzweigung der Polymerkette eingesetzt. Das Molekulargewicht liegt im Bereich von 60 bis 400 Da, bevorzugt von 62 bis 200 Da. Sie können aliphatische, cycloaliphatische oder aromatische Gruppen enthalten. Geeignete Polyole (A3) sind Verbindungen mit bis zu etwa 20 Kohlenstoffatomen je Molekül, wie z.B. Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Hydrochinondihydroxyethylether, Bisphenol A [2,2-Bis(4-hydroxyphenyl)propan], hydriertes Bisphenol A (2,2-Bis(4-hydroxycyclohexyl)propan) sowie deren Mischungen, sowie Trimethylolpropan, Glycerin oder Pentaerythrit. Auch Esterdiole wie z.B. δ-Hydroxybutyl-ε-hydroxy-capronsäureester, ω -Hydroxyhexyl-γ-hydroxybuttersäureester, Adipinsäure-(β-hydroxyethyl)ester oder Terephthalsäurebis(β-hydroxyethyl)ester können verwendet werden.

Di- oder Polyamine sowie Hydrazide können ebenfalls als (A3) eingesetzt werden, z.B. Ethylendiamin, 1,2- und 1,3-Diaminopropan, 1,4-Diaminobutan, 1,6-Diaminohexan, Isophorondiamin, das Isomerengemisch von 2,2,4- und 2,4,4-Trimethylhexamethylendiamin, 2-Methylpentamethylendiamin, Diethylentriamin, 1,3- und 1,4-Xylylendiamin, α,α,α',α'-Tetramethyl-1,3- und -1,4-xylylendiamin und 4,4-Diaminodicyclohexylmethan, Dimethylethylendiamin, Hydrazin oder Adipinsäuredihydrazid. Bevorzugt enthält die Komponente (A3) mindestens 2 Gew.-%, bezogen auf die Komponenten (A1) bis (A6), mindestens eine gegenüber der Reaktion mit NCO-Gruppen tri- oder höherfunktionelle Verbindung.

Das Polyurethanharz kann gegebenenfalls auch Bausteine (A4) enthalten, die sich jeweils an den Kettenenden befinden und diese abschließen. Diese Bausteine leiten sich zum einen von monofunktionellen, mit NCO-Gruppen reaktiven Verbindungen ab, wie Monoaminen, insbesondere mono-sekundären Aminen oder Monoalkoholen. Genannt seien hier beispielsweise Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl-(methyl)aminopropylamin, Morpholin, Piperidin oder deren substituierte Derivate, Amidamine aus diprimären Aminen und Monocarbonsäuren, Monoketimine von diprimären Aminen, primär/tertiäre Amine, wie z.B. N,N-Dimethylaminopropylamin.

Ebenfalls sind als Komponente (A4) Verbindungen geeignet, die aktive Wasserstoff-Atome mit gegenüber Isocyanat-Gruppen unterschiedlicher Reaktivität enthalten wie Verbindungen, die neben einer primären Aminogruppe auch sekundäre Aminogruppen oder neben einer OH-Gruppe auch COOH-Gruppen oder neben einer Aminogruppe (primär oder sekundär) auch OH-Gruppen aufweisen. Bevorzugt sind Verbindungen (A4), die neben einer Aminogruppe (primär oder sekundär) auch OH-Gruppen aufweisen. Beispiele hierfür sind primäre/sekundäre Amine, wie 3-Amino-1-Methylaminopropan, 3-Amino-1-Ethylaminopropan, 3-Amino-1-cyclohexylaminopropan, 3-Amino-1-Methylaminobutan; Mono-Hydroxycarbonsäuren, wie Hydroxyessigsäure, Milchsäure oder Äpfelsäure, weiterhin Alkanolamine wie N-Aminoethylethanolamin, Ethanolamin, 3-Aminopropanol, Neopentanolamin und besonders bevorzugt Diethanolamin. Auf diese Weise können zusätzlich funktionelle Gruppen in das polymere Endprodukt eingebracht werden.

Als Komponente (A5) geeignete ionische oder potentiell ionische Verbindungen sind z.B. Mono- und Dihydroxycarbonsäuren, Mono- und Diaminocarbonsäuren, Monound Dihydroxysulfonsäuren, Mono- und Diaminosulfonsäuren und ihre Salze wie Dihydroxycarbonsäuren, Hydroxypivalinsäure, N-(2-Aminoethyl)-β-alanin, 2-(2-Amino-ethylamino)-ethansulfonsäure, Ethylendiamin-propyl- oder Butylsulfonsäure, 1,2- oder 1,3-Propylendiamin-β-ethylsulfonsäure, Lysin, 3,5-Diaminobenzoesäure, das Hydrophilierungsmittel gemäß Beispiel 1 aus der EP-A 0 916 647 und deren Alkali- und/oder Ammoniumsalze; das Addukt von Natriumbisulfit an Buten-2-diol-1,4-Polyethersulfonat oder das propoxylierte Addukt aus 2-Butendiol und NaHSO₃ (z.B. in der DE-A 2 446 440, Seite 5-9, Formel I-III). Bevorzugte ionische oder potentielle ionische Verbindungen (A5) sind solche, die über Carboxy- und/oder Carboxylatgruppen verfügen. Besonders bevorzugte ionische Verbindungen (A5) sind Dihydroxycarbonsäuren, insbesondere α,α-Dimethylolalkansäuren, wie 2,2-Dimethylolessigsäure, 2,2-Dimethylolpropionsäure, 2,2-Dimethylolbuttersäure, 2,2-Dimethylolpentansäure oder Dihydroxybemsteinsäure.

Bevorzugt sind die Polyurethanharze frei von Sulfonsäuregruppen.

Die Komponenten (A1) bis (A5) können auch C=C-Doppelbindungen enthalten, die z.B. aus langkettigen aliphatischen Carbonsäuren oder Fettalkoholen stammen. Eine Funktionalisierung mit olefinischen Doppelbindungen ist beispielsweise auch durch den Einbau allylischer Gruppen oder von Acrylsäure oder Methacrylsäure sowie deren jeweiligen Estern möglich.

Weiterhin können die Komponenten (A1) bis (A5) auch nichtionisch hydrophilierend wirkende Verbindungen, z.B. Polyoxyalkylenether mit mindestens einer Hydroxyoder Aminogruppe, enthalten. Diese Polyether enthalten einen Anteil von 30 Gew.-% bis 100 Gew.-% an Bausteinen, die vom Ethylenoxid abgeleitet sind. In Frage kommen linear aufgebaute Polyether mit einer Funktionalität zwischen 1 und 3, aber auch Verbindungen der allgemeinen Formel (I), 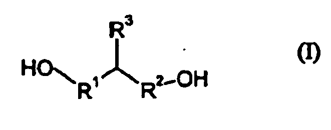 in welcher
- R¹ und R²: unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und
- R³: für einen nicht-hydroxyterminierten Polyester oder bevorzugt Polyether, insbesondere für einen alkoxyterminierten Polyethylenoxidrest steht.

Als Komponente (A6) geeignete Polyisocyanate sind z.B. Diisocyanate des Molekulargewichtsbereichs 140 bis 400 mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan, 1,5-Diisocyanatonaphthalin oder beliebige Gemische solcher Diisocyanate. Bevorzugt handelt es sich um Polyisocyanate oder Polyisocyanatgemische der genannten Art mit ausschließlich aliphatisch und/oder cycloaliphatisch gebundenen Isocyanatgruppen. Besonders bevorzugte Ausgangskomponenten (A6) sind Polyisocyanate oder Polyisocyanatgemische auf Basis von HDI, IPDI und/oder 4,4'-Diisocyanatodicyclohexylmethan.

Neben diesen einfachen Diisocyanaten sind auch solche Polyisocyanate geeignet, die Heteroatome in dem die Isocyanatgruppen verknüpfenden Rest enthalten und/oder eine Funktionalität von mehr als 2 NCO-Gruppen pro Molekül besitzen. Die erstgenannten sind z.B. durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Carbodiimid-, Iminooxadiazindion- und/oder Oxadiazintrionstruktur; als Beispiel für ein nicht-modifiziertes Polyisocyanat mit mehr als 2 NCO-Gruppen pro Molekül sei z.B. 4-Isocyanatomethyl-1,8-octandiisocyanat (Nonantriisocyanat) genannt.

Ebenfalls Gegenstand der Erfindung ist ein Verfahren zur Herstellung der Polyurethanharze, dadurch gekennzeichnet, dass aus den Komponenten (A1), (A5) und (A6) sowie gegebenenfalls den Komponenten (A2) bis (A4) ein OH- und/oder NH-funktionelles Polyurethan in einem gegenüber Isocyanatgruppen inertem Lösemittel hergestellt wird.

Die Herstellung der wasserverdünnbaren Polyurethanharze kann z.B. so erfolgen, dass zunächst ein Isocyanat-funktionelles Präpolymer aus Komponente (A6) und den Komponenten (A1) und (A5) und gegebenenfalls (A2), (A3) oder (A4) hergestellt wird und in einem zweiten Reaktionsschritt durch Reaktion mit einer oder mehreren der Verbindungen (A3), (A4) oder gegebenenfalls (A2) in einem gegenüber NCO-Gruppen inerten Lösemittel Medium ein OH- und/oder NH-funktionelles Polyurethan erhalten wird, wie z.B. in der EP-A 0 355 682 , S. 4, Z. 39 - 45, beschrieben.

Die Herstellung erfolgt in einer bevorzugten Ausführungsform so, dass das OH- und / oder NH-Gruppen enthaltende Polyurethanharz direkt durch Umsetzung der Komponenten (A1) bis (A6) in nicht-wässrigem Medium gebildet wird, wie z.B in EP-A 0 427 028, S.4, Z. 54 - S. 5, Z.1, beschrieben.

Die Urethanisierungsreaktion bei der Prepolymer-Herstellung wird normalerweise bei Temperaturen von 0° bis 140°C, je nach Reaktivität des eingesetzten Isocyanats, durchgeführt. Zur Beschleunigung der Urethanisierungsreaktion können geeignete Katalysatoren, wie sie zur Beschleunigung der NCO-OH-Reaktion dem Fachmann bekannt sind, eingesetzt werden. Beispiele sind tertiäre Amine wie z.B. Triethylamin, Organozinnverbindungen wie z.B. Dibutylzinnoxid, Dibutylzinndilaurat oder Zinnbis(2-ethylhexanoat) oder andere metallorganische Verbindungen.

Die Urethanisierungsreaktion wird bevorzugt in Gegenwart von gegenüber Isocyanat-Gruppen inaktiven Lösemitteln durchgeführt. Hierfür kommen insbesondere solche Lösemittel in Betracht, die mit Wasser verträglich sind, wie beispielsweise Ether, Ketone und Ester sowie N-Methylpyrrolidon. Die Menge dieses Lösemittels überschreitet zweckmäßigerweise nicht 30 Gew.-% und liegt bevorzugt im Bereich von 10 bis 25 Gew.-%, jeweils bezogen auf die Summe aus Polyurethanharz und Lösemittel. Dabei kann das Polyisocyanat (A6) der Lösung der übrigen Komponenten zügig zugegeben werden.

Die im Polyurethanharz über die Komponente (A5) eingebauten Säuregruppen können zumindest anteilig neutralisiert werden. Zur Neutralisation sind insbesondere tertiäre Amine geeignet, z.B. Trialkylamine mit 1 bis 12, bevorzugt 1 bis 6 C-Atomen in jedem Alkylrest. Beispiele hierfür sind Trimethylamin, Triethylamin, Methyldiethylamin, Tripropylamin und Diisopropylethylamin. Die Alkylreste können beispielsweise auch Hydroxylgruppen tragen, wie bei den Dialkylmonoalkanol-, Alkyldialkanol- und Trialkanolaminen. Beispiel hierfür ist Dimethylethanolamin, das bevorzugt als Neutralisationsmittel dient. Als Neutralisationsmittel sind gegebenenfalls auch anorganische Basen, wie Ammoniak oder Natrium- oder Kaliumhydroxid einsetzbar. Das Neutralisationsmittel wird im Molverhältnis zu den Säuregruppen des Präpolymers von 0,3:1 bis 1,3:1, bevorzugt von 0,4:1 bis 1:1 eingesetzt.

Die Neutralisation der freien COOH-Gruppen des erfindungsgemäßen Polyurethanharzes kann vor, während oder im Anschluss an die Urethanisierungsreaktion erfolgen. Bevorzugt wird der Neutralisationsschritt im Anschluss an die Urethanisierungsreaktion durchgeführt, in der Regel zwischen Raumtemperatur und 80°C, bevorzugt zwischen 40 bis 80°C. Es ist auch möglich, das wasserverdünnbare Polyurethanharz in nicht-neutralisierter Form zur Verfügung zu stellen und die Neutralisation erst bei der Herstellung des wässrigen Beschichtungsmittels, z.B. bei Einarbeiten der wasserverdünnbaren Polyurethanharzes in die OH-Gruppen-freie(n) Polyurethan-Dispersion(en) durchzuführen.

Gegebenenfalls können bei der Herstellung des Polyurethanharzes zur Hydrophilierung zusätzlich zu den Säuregruppen, anteilig alkylenoxidhaltige Monomereinheiten in eingebauter Form oder auch externe Emulgatoren zugegeben werden. Die hierbei einsetzbaren externen Emulgatoren sind anionischer und/oder nichtionischer Natur. Von den Emulgatoren mit anionischer Natur sind solche mit Carboxylatgruppen, Sulfat-, Sulfonat-, Phosphat- oder Phosphonatgruppen einsetzbar. Bevorzugt sind Emulgatoren mit Sulfat-, Sulfonat-, Phosphat- oder Phosphonatgruppen. Als nichtionogene externe Emulgatoren, die meist in Kombination mit den obengenannten anionischen Emulgatoren eingesetzt werden können, eignen sich Umsetzungsprodukte von aliphatischen, araliphatischen, cycloaliphatischen oder aromatischen Carbonsäuren, Alkoholen, Phenolderivaten bzw. Aminen mit Epoxiden, wie z.B. Ethylenoxid. Beispiele dafür sind Umsetzungsprodukte von Ethylenoxid mit Carbonsäuren des Rizinusöls, Abietinsäure, mit längerkettigen Alkoholen wie Oleylalkohol, Laurylalkohol, Stearylalkohol, mit Phenolderivaten wie z.B. substituierten Benzyl-, Phenylphenolen, Nonylphenolen und mit längerkettigen Aminen wie z.B. Dodecylamin und Stearylamin. Bei den Umsetzungsprodukten mit Ethylenoxid handelt es sich um Oligo- bzw. Polyether mit Polymerisationsgraden zwischen 2 und 100, bevorzugt zwischen 5 und 50. Die externen Emulgatoren können in Mengen von 0,1 bis 10 Gew.-%, bezogen auf den nichtflüchtigen Anteil des wasserverdünnbaren Polyurethanharzes, dem wasserverdünnbaren Polyurethanharz oder einer anderen Komponente des wässrigen Beschichtungssystems zugegeben werden. Bevorzugt werden aber nur Säuregruppen im Sinne einer rein internen Hydrophilierung eingesetzt.

Bevorzugt erfolgt die Herstellung der wässrigen Beschichtungssysteme so, dass die nicht-wässrige Komponente, enthaltend das Polyurethanharz, unter Scherung in eine wässrige Bindemittelkomponente eingearbeitet wird. In den so erhaltenen wässrigen Stammlack wird dann in einem zweiten Schritt unter Scherung die Vernetzerkomponente, welche bevorzugt ein Polyisocyanat mit freien NCO-Gruppen enthält, eingearbeitet. Die lacküblichen Hilfs- und Zusatzstoffe können entweder zusammen mit der Vernetzerkomponente, den Bindemittelkomponenten oder nachträglich in den fertigen Wasserlack eingearbeitet werden.

Hydroxylgruppenfreie Polyurethan-Dispersionen (b) sind in der Lacktechnologie wohl bekannt. Bevorzugt sind z.B. die in der DE-A 26 51 506 (S. 6, Z. 1 - 13) oder in der DE-A 1 570 615 (S. 2, Z. 9 - S. 3, Z. 3) beschriebenen, linearen, vergleichsweise (gemessen am erfindungsgemäßen wasserverdünnbaren Polyurethanharz) hochmolekularen Polyurethan-Dispersionen.

In einer bevorzugten Ausführungsform der wässrigen Beschichtungssysteme, enthaltend die erfindungsgemäßen Polyurethane, werden hydroxylgruppenfreie Polyurethan-Dispersionen eingesetzt, welche neben nichtionischen, hydrophilen Gruppen in Form von Polyethylenoxideinheiten auch anionische Gruppen, bevorzugt Carboxylat- und/oder Sulfonatgruppen, besonders bevorzugt Sulfonatgruppen und speziell deren Alkali-Salze als hydrophile Gruppen enthalten. Bei der Auswahl der Rohstoffen ist darauf zu achten, dass ein Gehalt an nichtionischen, hydrophilen Gruppen in Form von Polyethylenoxideinheiten zwischen 0,1 und 10 Gew.-%, bevorzugt zwischen 1 bis 7 Gew.-% bezogen auf Festharz resultiert und der Gehalt an ionischen Gruppen 2 bis 20, bevorzugt 2,5 bis 15 mmol/100 g Festharz beträgt. In einer besonders bevorzugten Ausführungsform werden hydroxylgruppenfreie Polyurethan-Dispersionen mit einem Kosolvensgehalt von 0,5 bis 20 Gew.-%, bevorzugt von 1 bis 10 Gew.-% und besonders bevorzugt von 2,5 bis 8 Gew.-% eingesetzt.

Geeignete Kosolventien sind die bereits oben beschriebenen, bevorzugt ist N-Methylpyrrolidon. Die Zugabe der Kosolventien kann zu beliebigem Zeitpunkt im Herstellprozess der hydroxylgruppenfreien Polyurethan-Dispersionen zugegeben werden.

Die wässrigen Beschichtungssysteme, enthaltend die Polyurethanharze, können gegebenenfalls auch andere Bindemittel oder Dispersionen, z.B. auf Basis von Polyestern, Polyurethanen, Polyethern, Polyepoxiden oder Polyacrylaten und gegebenenfalls Pigmente und sonstige in der Lackindustrie bekannten Hilfs- und Zusatzstoffe enthalten.

Durch Kombination mit Vernetzern können dabei, je nach Reaktivität oder gegebenenfalls Blockierung der Vernetzer, sowohl Einkomponenten(1K)-Lacke als auch Zweikomponenten(2K)-Lacke hergestellt werden. Unter 1K-Lacken im Sinne der vorliegenden Erfindung sind dabei Überzugsmittel zu verstehen, bei denen Bindemittelkomponente und Vernetzerkomponente zusammen gelagert werden können, ohne dass eine Vernetzungsreaktion in merklichen oder für die spätere Applikation schädlichen Ausmaß stattfindet. Die Vernetzungsreaktion findet erst bei Applikation nach einer Aktivierung des Vernetzers statt. Diese Aktivierung kann z.B. durch Temperatursteigerung bewirkt werden. Unter 2K-Lacken im Sinne der vorliegenden Erfindung versteht man Überzugsmittel, bei denen Bindemittelkomponente und Vernetzerkomponente aufgrund ihrer hohen Reaktivität in getrennten Gefäßen gelagert werden müssen. Die beiden Komponenten werden erst kurz vor Applikation gemischt und reagieren dann im Allgemeinen ohne zusätzliche Aktivierung. Zur Beschleunigung der Vemetzungsreaktion können aber auch Katalysatoren eingesetzt oder höhere Temperaturen angewendet werden.

Geeignete Vernetzer sind beispielsweise Polyisocyanat-Vernetzer, Amid- und Amin-Formaldehydharze, Phenolharze, Aldehyd- und Ketonharze, wie z.B. Phenol-Formaldehydharze, Resole, Furanharze, Harnstoffharze, Carbamidsäureesterharze, Triazinharze, Melaminharze, Benzoguanaminharze, Cyanamidharze, Anilinharze, wie sie in "Lackkunstharze", H. Wagner, H.F. Sarx, Carl Hanser Verlag München, 1971, beschrieben sind. Bevorzugt sind als Vernetzer Polyisocyanate.

Polyisocyanate können mit freien und/oder blockierten NCO-Gruppen eingesetzt werden. Geeignet als solche Vernetzerharze sind blockierte Polyisocyanate beispielsweise auf Basis von Isophorondiisocyanat, Hexamethylendiisocyanat, 1,4-Diisocyanatocyclohexan, Bis-(4-isocyanatocyclohexan)-methan oder 1,3-Diisocyanatobenzol oder auf Basis von Lackpolyisocyanaten wie Biuret- oder Isocyanuratgruppen aufweisende Polyisocyanate von 1,6-Diisocyanatohexan, Isophorondiisocyanat oder Bis-(4-isocyanatocyclohexan)-methan oder Urethangruppen aufweisenden Lackpolyisocyanaten auf Basis von 2,4- und/oder 2,6-Diisocyanatotoluol oder Isophorondiisocyanat einerseits und niedermolekularen Polyhydroxylverbindungen wie Trimethylolpropan, den isomeren Propandiolen oder Butandiolen oder beliebigen Gemischen derartigen Polyhydroxylverbindungen andererseits.

Geeignete Blockierungsmittel für die genannten Polyisocyanate sind beispielsweise einwertige Alkohole wie Methanol, Ethanol, Butanol, Hexanol, Cyclohexanol, Benzylalkohol, Oxime wie Acetoxim, Methylethylketoxim, Cyclohexanonoxim, Lactame wie ε-Caprolactam, Phenole, Amine wie Diisopropylamin oder Dibutylamin, Dimethylpyrazol oder Triazol sowie Malonsäuredimethylester, Malonsäurediethylester oder Malonsäuredibutylester.

Bevorzugt ist der Einsatz-niedrigviskoser, hydrophober oder hydrophilierter Polyisocyanate mit freien Isocyanatgruppen auf Basis aliphatischer, cycloaliphatischer, araliphatischer und/oder aromatischer Isocyanate, besonders bevorzugt aliphatischer oder cycloaliphatischer Isocyanate, da sich so ein besonders hohes Beständigkeitsniveau des Lackfilms erreichen lässt. Die Vorteile der Bindemittel-Dispersionen treten in Kombination mit diesen Vernetzern am deutlichsten zutage. Diese Polyisocyanate weisen bei 23°C im Allgemeinen eine Viskosität von 10 bis 3500 mPas auf. Falls erforderlich, können die Polyisocyanate in Abmischung mit geringen Mengen an inerten Lösemitteln zum Einsatz gelangen, um die Viskosität auf einen Wert innerhalb des genannten Bereiches abzusenken. Auch Triisocyanatononan kann allein oder in Mischungen als Vernetzerkomponente eingesetzt werden.

Das hier beschriebene wasserverdünnbare Polyurethanharz und die hydroxylgruppenfreie Polyurethan-Dispersion sind im Allgemeinen ausreichend hydrophil, so dass die Dispergierbarkeit der Vernetzerharze, soweit es sich nicht ohnehin um wasserlösliche oder -dispergierbare Substanzen handelt, gewährleistet ist. Wasserlösliche bzw. dispergierbare Polyisocyanate sind z.B. durch Modifikation mit Carboxylat-, Sulfonat- und/oder Polyethylenoxidgruppen und/oder Polyethylenoxid/Polypropylenoxidgruppen erhältlich.

Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielsweise in der EP-A 0 540 985 (S. 3, Z 55 - S. 4 Z. 5) beschrieben. Gut geeignet sind auch die in der EP-A-0 959 087 (S. 3 Z. 39 - 51) beschriebenen Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden können. Auch die in der DE-A 100 078 21 (S. 2 Z. 66 - S. 3 Z. 5) beschriebenen wasserdispergierbaren Polyisocyanatgemische auf Basis von Triisocyanatononan sind geeignet, sowie mit ionischen Gruppen (Sulfonat-, Phosphonatgruppen) hydrophilierte Polyisocyanate, wie sie z.B. in der DE-A 10 024 624 (S. 3 Z. 13 - 33) beschrieben sind. Ebenso möglich ist die Hydrophilierung durch Zusatz handelsüblicher Emulgatoren.

Prinzipiell ist natürlich auch der Einsatz von Mischungen verschiedener Vernetzerharze möglich.

Als lackübliche Hilfs- und Zusatzmittel, die, wie bereits weiter oben beschrieben, sowohl dem wässrigen Beschichtungssystem vor, während oder nach dessen Herstellung als auch den in diesem enthaltenen Bindemittel- oder Vemetzerkomponenten zugesetzt werden können, kommen z.B. Entschäumungsmittel, Verdickungsmittel, Pigmente, Dispergierhilfsmittel, Mattierungsmittel, Katalysatoren, Hautverhinderungsmittel, Antiabsetzmittel oder Emulgatoren sowie Additive, die den gewünschten Softfeel-Effekt verstärken können, in Frage.

Die so erhaltenen wässrigen Beschichtungssysteme, enthaltend das Polyurethanharz, eignen sich für alle Einsatzgebiete, in denen wässrige Anstrich- und Beschichtungssysteme mit hohen Anforderungen an die Oberflächengüte Beständigkeit der Filme Verwendung finden, z.B. Beschichtung mineralischer Baustoff-Oberflächen, Lackierung und Versiegelung von Holz und Holzwerkstoffen, Beschichtung metallischer Oberflächen (Metallbeschichtung), Beschichtung und Lackierung asphalt- oder bitumenhaltiger Beläge, Lackierung und Versiegelung diverser Kunststoffoberflächen (Kunststoffbeschichtung) sowie Hochglanzlacke. Bevorzugt sind sie aber zur Erzeugung von Softfeel-Effektlacken, die gute Lösemittelbeständigkeit und insbesondere gute Beständigkeit gegen Sonnenmilch (Suntan-Lotion-Test) gewährleisten, geeignet. Bevorzugt werden solche Beschichtungsmittel in der Kunststofflackierung oder der Holzlackierung eingesetzt, wobei die Aushärtung üblicherweise bei Temperaturen zwischen Raumtemperatur und 130°C erfolgt. Die Zweikomponenten-Technologie mit nicht-blockierten Polyisocyanaten als Vernetzer erlaubt dabei die Verwendung vergleichsweise niedriger Aushärtetemperaturen.

Die wässrigen Beschichtungssysteme, enthaltend die wasserverdünnbaren Polyurethane werden üblicherweise in Einschichtlacken oder in der Klaroder Decklackschicht (oberste Schicht) von Mehrschichtaufbauten eingesetzt.

Die Herstellung der Beschichtung kann nach den unterschiedlichen Spritzverfahren wie beispielsweise Luftdruck-, Airless- oder Elektrostatik-Spritzverfahren unter Verwendung von Ein- oder gegebenenfalls Zweikomponenten-Spritzanlagen erfolgen. Die Lacke und Beschichtungssysteme, enthaltend die erfindungsgemäßen Polyurethanharze, können jedoch auch nach anderen Methoden, beispielsweise durch Streichen, Rollen oder Rakeln appliziert werden.

### Beispiele

Die folgenden Beispiele sollen die Erfindung näher erläutern, ohne sie jedoch einzuschränken. Alle Angaben in % beziehen sich - soweit nicht anders vermerkt - auf das Gewicht. Viskositätsmessungen wurden in einem Kegel-Platte-Viskosimeter nach DIN 53019 bei einem Schergefälle von 40 s⁻¹ durchgeführt.

### Beispiel 1 (erfindungsgemäß)

In einem 15-1-Reaktionsgefäß mit Rührer, Heizvorrichtung und Wasserabscheider mit Kühlvorrichtung werden 1281 g Phthalsäureanhydrid, 5058 g Adipinsäure, 6387 g Hexandiol-1,6 und 675 g Neopentylglykol eingewogen und unter Stickstoff in einer Stunde auf 140°C aufgeheizt. In weiteren 9 Stunden heizt man auf 220°C auf und kondensiert bei dieser Temperatur so lange, bis eine Säurezahl kleiner 3 erreicht ist. Das so erhaltene Polyesterharz hat eine Viskosität (bestimmt als Auslaufzeit einer 80-%igen Lösung des Polyesters in Methoxypropylacetat im DIN 4-Becher bei 23°C) von 54 Sekunden und eine OH-Zahl von 160 mg KOH/g.

In einem 6-1-Reaktionsgefäß mit Kühl-, Heiz- und Rührvorrichtung werden in einer Stickstoffatmosphäre 1560 g des oben beschriebenen Polyesters vorgelegt und zusammen mit 1520 g eines linearen Polyestercarbonatdiols des zahlenmittleren Molekulargewichts 2000 (Desmophen® VP LS 2391, Bayer AG Leverkusen, DE), 120 g Trimethylolpropan, 160 g Dimethylolpropionsäure, 1000 g N-Methylpyrrolidon und 5 g Zinn-(II)-octoat auf 130°C aufgeheizt und 30 min homogenisiert. Anschließend kühlt man auf 80°C ab, gibt 640 g Hexamethylendiisocyanat unter kräftigen Rühren zu, heizt (unter Ausnutzung der Exothermie der Reaktion) auf 140°C auf und hält das Gemisch solange bei dieser Temperatur, bis sich keine NCO-Gruppen mehr feststellen lassen.

Anschließend kühlt man das so erhaltene Polyurethan auf 90°C - 100°C ab, gibt 53 g Dimethylethanolamin (Neutralisationsgrad 50 %) zu, verdünnt durch Zugabe von 280 g N-Methylpyrrolidon, und homogenisiert das Gemisch. Nach dem Abkühlen erhält man ein wasserverdünnbares Polyurethanharz mit einem OH-Gehalt (100-%ig) von 1,4 %, einer Säurezahl (100-%ig) von 18,5 und einer Viskosität von ca. 20000 mPas (23°C; D = 40 s⁻¹) bei einem Festkörpergehalt von 76 Gew.-%. Das Festharz weist einen Carbonatgruppenanteil O(C=O)O von 8,9 Gew.-% auf.

### Beispiel 2 (nicht erfindungsgemäß)

"Hydroxy ester urethane B" gemäß der EP-A 0 926 172 (S. 7, Abschnitt [00640] bis [0065]) 80%ig in N-Methylpyrrolidon. Das Festharz weist einen Carbonatgruppenanteil O(C=O)O von 4,7 Gew.-% auf.

### Beispiel 3 (nicht erfindungsgemäß)

In einem 6-1-Reaktionsgefäß mit Kühl-, Heiz- und Rührvorrichtung werden in einer Stickstoffatmosphäre 1170 g des Polyesters aus Beispiel 1 vorgelegt und zusammen mit 1140 g eines linearen Polyestercarbonatdiols des zahlenmittleren Molekulargewichts 2000 (Desmophen® VP LS 2391, Bayer AG, Leverkusen, DE), 90 g Trimethylolpropan, 120 g Dimethylolpropionsäure, 125 g N-Methylpyrrolidon und 3,8 g Zinn-(II)-octoat auf 130°C aufgeheizt und 30 min homogenisiert. Anschließend kühlt man auf 80°C ab, gibt 480 g Hexamethylendiisocyanat unter kräftigen Rühren zu, heizt (unter Ausnutzung der Exothermie der Reaktion) auf 140°C auf und hält das Gemisch solange bei dieser Temperatur, bis sich keine NCO-Gruppen mehr feststellen lassen.

Anschließend kühlt man das so erhaltene Polyurethan auf 90° - 100°C ab, gibt 39 g Dimethylethanolamin (Neutralisationsgrad 50 %) zu, homogenisiert das Gemisch 15 min und dispergiert mit 2270 g demineralisiertes Wasser. Die so erhaltene wässrige Polyurethanharz-Dispersion hat einen OH-Gehalt (100-%ig) von 1,4 %, eine Säurezahl (100-%ig) von 18 und eine Viskosität von ca. 1500 mPas (23°C; D = 40 s⁻¹) bei einem Festkörpergehalt von 54,3 Gew.-%. Das Festharz weist einen Carbonatgruppenanteil O(C=O)O von 8,9 Gew.-% auf.

### Beispiel 4: Polyurethan-Dispersion 4 (Bayhydrol® PR 240, Bayer AG, Leverkusen)

Mit Sulfonatgruppen hydrophilierte, nicht Hydroxylgruppen-haltige aliphatische Polyester-basierte Polyurethan-Dispersion mit einem Festkörpergehalt von 40 Gew.-%, einer mittl. Teilchengröße von ca. 200 nm bei einem pH-wert von ca. 7; die Dispersion ist frei von organischen Lösemitteln.

### Beispiel 5: Polyurethan-Dispersion 5

1700 Gew.-Teile eines Polyesterdiols aus Hexandiol-1,6, 2,2-Dimethylpropandiol-1,3 und Adipinsäure der OH-Zahl 66 und 58,5 Gew.-Teile eines Polyethermonoalkohols aus N-Butanol, Ethylenoxid und Propylenoxid (im Molverhältnis 83:17) der OH-Zahl 25 werden bei 100°C im Vakuum von etwa 15 mbar entwässert. Anschließend wird das Vakuum mit Stickstoff gebrochen. Nach Zugabe von 250 Teilen N-Methylpyrrolidon, 250 Gew.-Teilen 1-Isocyanato-3,3,5-trimethyl-5-isocyanatomethyl-cyclohexan (Isophorondiisocyanat) und 190 Gew.-Teilen Hexamethylendiisocyanat wird die Mischung bei 100°C solange gerührt, bis sie einen Gehalt von 4,4 Gew.-% NCO aufweist. Nach dem Abkühlen auf 50-60°C werden 3900 Gew.-Teile wasserfreien Acetons zugegeben. Die acetonische Lösung wird auf 45°C gekühlt. Anschließend lässt man ein Gemisch aus 107 Gew.-Teilen 1-Amino-3,3,5-trimethyl-5-aminomethyl-cyclohexan (IPDA) in 210 Gew.-Teilen wasserfreiem Aceton zulaufen. Die Reaktion ist exotherm. Nach Abklingen der Exothermie gibt man 22 Gew.-Teile N-(2-Aminoethyl)-2-aminoethansulfon-saures Natrium und 5 Gew.-Teile Hydrazinmonohydrat gelöst in 250 Gew.-Teilen Wasser zu. Nach 10-minütigem Nachrühren werden unter lebhaftem Rühren 2700 Teile Wasser langsam eingerührt. Dabei bildet sich eine bläulich-weiße Dispersion des Festkörpers in einer Mischung aus Wasser und Aceton. Nach der destillativen Entfernung des Acetons verbleibt eine wässrige Dispersion mit einem Feststoffgehalt von 45 ± 1 Gew.-%.

Die Messung des Teilchendurchmessers mittels Laserkorrelation ergibt einen Wert von ca. 210 nm. Die Dispersion hat eine Auslaufzeit (DIN 4 mm Becher) von 22 Sekunden. Die erhaltene hydroxylgruppenfreie Polyurethan-Dispersion weist einen Gehalt von organischen Colösern (N-Methylpyrrolidon) von ca. 4,5 Gew.-% auf.

### Anwendungsbeispiel: Herstellung von mattierten Softfeel-Effekt-Lacken

Zur Lackherstellung werden 30,9 Gew.-Teile der Polyurethan-Dispersion 4 (40-%ig) in drei Ansätzen (1,2,3) mit jeweils 16,3 Gew.-Teilen des wasserverdünnbaren Polyurethanharzes aus Bsp. 1 (76-%ig), mit 15,5 Gew.-Teilen des wasserverdünnbaren Polyurethanharzes aus Bsp. 2 und mit 22,8 Gew.-Teilen der Polyester-Polyurethan-Dispersion aus Bsp. 3 (Gew.-Verhältnis von vernetzbarem zu nichtfunktionellen Harz jeweils 50:50 bezogen auf Festharz) versetzt. Dazu werden jeweils 0,2 Gew.-Teile Entschäumer DNE (K. Obermayer, Bad Berleburg, DE), 0,3 Gew.-Teile Tego® Wet KL 245 (50-%ig in Wasser; Tego Chemie, Essen, DE), 0,4 Gew.-Teile Byk® 348 (Byk Chemie, Wesel, DE), 1,2 Gew.-Teile Aquacer® 535 (Byk Chemie, Wesel, DE), 2,8 Gew.-Teile Silitin® Z 86 (Hoffmann & Söhne, Neuburg, DE), 4,3 Gew.-Teile Pergopak® M3 (Martinswerk, Bergheim, DE), 1,4 Gew.-Teile Talkum IT Extra (Norwegien Talc, Frankfurt, DE), 11,2 Gew.-Teile Bayferrox® 318 M (Bayer AG, Leverkusen, DE) und 18 Gew.-Teile demin. Wasser in einer Perlmühle zu einem wässrigen Mahlgut angerieben. Nach 16 h Standzeit bei Raumtemperatur werden 1,4 Gew.-Teile Mattierungsmittel OK 412 (Degussa, Frankfurt, DE) mittels Dissolver eingearbeitet. Es werden drei weitere Ansätze (4,5,6) angefertigt, wobei jedoch anstelle der Polyurethandispersion 4, 27,5 Gew.-Teile der Polyurethan-Dispersion 5 (45-%ig) eingesetzt werden. Alle anderen Komponenten werden in den bereits genannten Mengenverhältnissen eingesetzt.

Bei Verwendung der Polyurethanlösungen aus Bsp. 1 oder 2 kann eine zusätzliche Menge demineralisiertes Wasser zur Einstellung der gewünschten Viskosität des Mahlguts oder Stammlacks zugesetzt werden. Man erhält so einen lagerstabilen wässrigen Stammlack mit einem Bindemittelgehalt von ca. 27,5 %, einem Gehalt an Pigmenten und Füllstoffen von ca. 20,5 % und Additiven von ca. 2 %. Der pH-Wert liegt bei 7 ± 0,5.

In den Stammlack-Ansätzen (1-6) wird anschließend per Dissolver eine 75-%ige Lösung des Polyisocyanat-Vernetzers Bayhydur® 3100 (Bayer AG, Leverkusen, DE) in Methoxypropylacetat, entsprechend einem Vernetzungsverhältnis NCO:OH von 1,5:1 eingearbeitet. Der so erhaltene Lack wird auf eine Kunststoff-Platte (z.B. Bayblend® T 65 (Polycarbonat/ABS-Blend), spritzappliziert (Trockenschichtdicke 40 µm- 50 µm) und nach 10 min Ablüftzeit 30 min bei 80°C und dann 16 h bei 60°C getrocknet. Man erhält einen matten, gleichmäßigen Lackfilm, der sich samtig weich anfühlt ("Softfeel"-Haptik). Tabelle 1 zeigt die lacktechnischen Prüfergebnisse der Bindemittelkombinationen 1-6:

**Tabelle 1: Lacktechnische Ergebnisse der Softfeel-Lacke gemäß Anwendungsbeispiel**

| **Ansatz** | **OH-fkt. Dispersion** | **nichtfunkt. Dispersion** | **Vernetzer** | **Haptik*** | **Suntan-Lotion- Beständigkeit 1h 74°C**** |
|---|---|---|---|---|---|
| 1 | Bsp. 1 | Bsp. 4 | Bayhydur® 3100 | 1-2 | 3 |
| 2 | Bsp. 2 | Bsp. 4 | Bayhydur® 3100 | 1-2 | 4-5 |
| 3 | Bsp. 3 | Bsp. 4 | Bayhydur® 3100 | 2-3 | 5 |
| 4 | Bsp. 1 | Bsp. 5 | Bayhydur® 3100 | 2-3 | 2 |
| 5 | Bsp. 2 | Bsp. 5 | Bayhydur® 3100 | 2 | 3-4 |
| 6 | Bsp. 3 | Bsp. 5 | Bayhydur® 3100 | 2-3 | 3 |

| | | | | | |
|---|---|---|---|---|---|
| * Beurteilung auf einer Skala von 0 - 5 (0 = samtiges, weiches, warmes Griffempfinden; 5 = hartes, glattes, kaltes Griffempfinden) | | | | | |
| ** Die Prüfung der Beständigkeit gegen Sonnenmilch und Insektenschutzmittel ("Suntan Lotion Test") erfolgte in Anlehnung an die Ford-Prüfung/USA (Engeneering material specification/soiling and cleanability FLTM BN 112-08, ISO 105-A02/AATCC). Die Prüfung wird auf einer lackierten Kunststoffplatte durchgeführt. Es wird ein Ring aus Glas (d = 19mm ± 3mm) auf die Lackoberfläche gelegt und 0,25 ml Sonnenmilch ("Coppertone Kids", Fa. Coppertone) mit einer Spritze eingefüllt. Sollte die Sonnenmilch durch ihre Rheologie nicht von selbst verlaufen, so wird sie mit einem geeigneten Gegenstand so verteilt, das die Fläche die der Ring einschließt benetzt wird. Dann wird der Prüfling 1h bei RT bzw. bei 74°C gelagert und anschließend der Ring entfernt, um die Prüfflächen mit einem Kosmetiktuch abzuwischen. Die Beurteilung des Schadbilds erfolgt visuell auf einer Skala von 0 - 5: 0 = keine Schädigung 1 = reversible Schädigung (vollständige Regeneration) 2 = Fleck / Glanzverlust / Farbveränderung 3 = vereinzelt Blasen oder Runzeln 4 = Runzeln, Blasen 5 = starkes Runzeln / Ablösung vom Untergrund / Film zerstört | | | | | |

Die Lacke auf Basis des erfindungsgemäßen wasserverdünnbaren OH-Gruppen enthaltenden Polyurethanharzes aus Bsp. 1 weisen sowohl in Kombination mit PUR-Dispersion aus Bsp. 4 als auch mit PUR-Dispersion aus Bsp. 5, bei vergleichbar guter Haptik, eine signifikant bessere Suntan-Lotion-Beständigkeit auf, im Vergleich zu der Verwendung der nicht erfindungsgemäßen Bindemittel (Bsp. 2, 3). Außerdem wird bei Einsatz der nichtfunktionellen Polyurethan-Dispersion aus Bsp. 5 gegenüber Bsp. 4 jeweils eine Verbesserung der Suntan-Lotion-Beständigkeit gefunden.

## Patentansprüche

1. Verfahren zur Herstellung wässriger Beschichtungssysteme, bei dem mindestens eine nicht-wässrige Komponente, enthaltend ein wasserverdünnbares Polyurethanharz erhältlich durch Umsetzung von
A1) mindestens einem Polycarbonatpolyol des Molekulargewichts Mn von 400 bis 6000 Da,
A2) gegebenenfalls eines von Komponente (A1) verschiedenen Polyesterpolyols des zahlenmittleren Molekulargewichts Mₙ von 400 bis 6000 Da,
A3) gegebenenfalls einer niedermolekularen, zwei oder mehr Hydroxyl- und/oder Aminogruppen-haltigen Verbindung des Molekulargewichts 62 bis 400 Da,
A4) gegebenenfalls einer Verbindung, die bezüglich der Reaktion mit NCO-Gruppen monofunktionell ist oder aktive Wasserstoff-Atome unterschiedlicher Reaktivität enthält, wobei sich diese Bausteine jeweils am Kettenende des Urethangruppen enthaltenden Polymers befinden,
A5) mindestens einer Verbindung, die mindestens zwei gegenüber Isocyanatgruppen reaktive Gruppen und mindestens eine zur Anionenbildung befähigte Gruppe aufweist und
A6) einem oder mehreren Polyisocyanaten,
wobei das entstehende Polyurethanharz einen Gehalt an eingebauten Carbonatgruppen O(C=O)O von 5,8 bis 20,0 Gew.-% enthält und der Festkörpergehalt mindestens 70 Gew.-% beträgt, wobei der zu 100 Gew.-% fehlende Rest aus gegenüber Isocyanatgruppen inerten Lösemitteln sowie gegebenenfalls lacküblichen Hilfs- und Zusatzstoffen besteht,
in eine wässrige Phase, enthaltend mindestens eine wässrige Polyurethan-Dispersion mit einem OH-Gehalt von < 0,5 Gew.-% und gegebenenfalls Hilfs- und Zusatzstoffe, eingearbeitet wird und anschließend in diesen wässrigen Stammlack mindestens eine Vernetzerkomponente sowie gegebenenfalls weitere Hilfs- und Zusatzstoffe dispergiert werden.

2. Verwendung des gemäß Anspruch 1 erhältlichen, wässrigen Beschichtungssystems zur Erzeugung von Softfeel-Effektlacken.

3. Verwendung des wässrigen Beschichtungssystems gemäß Anspruch 2 in der Kunststofflackierung oder in der Holzlackierung.

## Claims

1. Process for preparing aqueous coating systems in which process at least one non-aqueous component containing a water-dilutable polyurethane resin obtainable by reacting
A1) at least one polycarbonate polyol whose molecular weight Mn is from 400 to 6000 Da,
A2) if desired, a polyester polyol which is different from component (A1) and whose number-average molecular weight Mₙ is from 400 to 6000 Da,
A3) if desired, a low molecular weight compound which contains two or more hydroxy and/or amino groups and whose molecular weight is from 62 to 400 Da,
A4) if desired, a compound which is monofunctional in terms of reaction with NCO groups or which contains active hydrogen atoms differing in reactivity, these units being located in each case at the chain end of the polymer containing urethane groups,
A5) at least one compound containing at least two isocyanate-reactive groups and at least one group capable of forming anions, and
A6) one or more polyisocyanates,
the resultant polyurethane resin containing from 5.8 to 20.0% by weight of incorporated carbonate groups O(C=O)O and the solids content being at least 70% by weight, the remainder to 100% by weight being made up of solvents which are inert towards isocyanate groups and also, where appropriate, of customary coatings auxiliaries and additives,
is incorporated into an aqueous phase comprising at least one aqueous polyurethane dispersion having an OH content of < 0.5% by weight and, if desired, auxiliaries and additives and subsequently at least one crosslinker component and also, where appropriate, further auxiliaries and additives are dispersed into this aqueous stock varnish.

2. Use of the aqueous coating system obtainable according to Claim 1 to produce soft-feel effect coating materials.

3. Use of the aqueous coating system according to Claim 2 in the coating of plastics or in wood coating.

## Revendications

1. Procédé pour la production de systèmes aqueux de revêtement, dans lequel on incorpore au moins un composant non aqueux, contenant une résine polyuréthane diluable à l'eau, pouvant être obtenue par mise en réaction
A1) d'au moins un polycarbonatepolyol de masse moléculaire Mn de 400 à 6 000 Da,
A2) éventuellement d'un polyesterpolyol différent du composant (A1), de masse moléculaire moyenne en nombre Mₙ de 400 à 6 000 Da,
A3) éventuellement d'un composé de faible masse moléculaire, contenant deux ou plus de deux groupes hydroxy et/ou amino, ayant une masse moléculaire de 62 à 400 Da,
A4) éventuellement d'un composé qui est monofonctionnel en ce qui concerne la réaction avec des groupes NCO ou contient des atomes d'hydrogène actifs à réactivité différente, ces constituants se trouvant chacun en bout de chaîne du polymère contenant des groupes uréthane,
A5) d'au moins un composé qui comporte au moins deux groupes réactifs vis-à-vis de groupes isocyanate et au moins un groupe apte à la formation d'anions et
A6) d'un ou de plusieurs polyisocyanates,
la résine polyuréthane résultante ayant une teneur en groupes carbonate O(C=O)O incorporés de 5,8 à 20,0 % en poids et la teneur en solides étant d'au moins 70 % en poids, le reste pour compléter à 100 % en poids consistant en des solvants inertes vis-à-vis de groupes isocyanate ainsi qu'éventuellement en des adjuvants et additifs usuels dans des peintures,
dans une phase aqueuse contenant au moins une dispersion aqueuse de polyuréthane ayant une teneur en groupes OH de < 0,5 % en poids et éventuellement des adjuvants et additifs, et ensuite on disperse dans cette peinture de base à l'eau au moins un composant agent de réticulation ainsi qu'éventuellement d'autres adjuvants et additifs.

2. Utilisation du système aqueux de revêtement, pouvant être obtenu selon la revendication 1, pour la production de peintures à effet Soft Feel.

3. Utilisation du système aqueux de revêtement selon la revendication 2, dans la mise en peinture de matières plastiques ou dans la mise en peinture du bois.
